# DEMANDE DE BREVET EUROPEEN

(11) **EP 1 138 236 A2**
(43) Date de publication de la demande: **04.10.2001**
(21) Numéro de dépôt: 01440085.7
(22) Date de dépôt: 23.03.2001
(51) Int. Cl.: A47J 43/00

(54) **Appareil à fondre les fromages**

(30) Priorité: 23.03.2000 FR 0003712
(71) Demandeur: Barberet, Julien, 90360 Lachapelle sous Rougement (FR)
(72) Inventeur: Barberet, Julien, 90360 Lachapelle sous Rougement (FR)
(74) Mandataire: Burkard, Thierry

(57) **Abrégé**

L' invention concerne un appareil électroménager destiné à fondre les fromages, comportant plus particulièrement des moyens permettant de régler la distance entre le fromage à fondre et la résistance chauffante, et des moyens pour le déversement automatique d'au moins deux godets contenant le fromage fondu.

L'appareil comporte un plateau (2), un support porte fromage (15) et un bras vertical supportant des moyens de réglages et un élément chauffant, et un volant horizontal (1) disposé sous le plateau (2) pour entraîner un axe central (9) commandant le déplacement des composants de l'appareil dans le plan vertical.

Sous le support porte fromage (15) sont fixés deux axes (19) articulés à leur extrémité supérieure avec des godets (16) articulés autour d'une charnière (22) solidaire dudit support porte fromage.

## Description

La présente invention concerne un appareil électroménager destiné à fondre les fromages, comportant plus particulièrement des moyens permettant de régler la distance entre le fromage à fondre et la résistance chauffante, et des moyens pour le déversement automatique d'au moins deux godets contenant le fromage fondu.

On connaît différents types d'appareils électroménagers conçus pour faire fondre des fromages, et communément appelés appareils ou fours à raclette.

Mais il existe des appareils plus conformes à la tradition, et selon certains avis de plus grande convivialité, permettant de faire fondre un bloc entier de fromage, par exemple un quart ou une demi roue de fromage à raclette.

Ces appareils sont généralement constitués d'une base métallique présentant un poids suffisant pour garantir une parfaite stabilité de l'ensemble et sur laquelle est monté un bras perpendiculaire comportant, dans sa partie inférieure un support agencé pour recevoir et maintenir en place un quart ou une demi roue de fromage, et dans sa partie supérieure, un élément chauffant monté à coulisse.

Ces appareils comportent également des moyens d'alimentation en énergie électrique, et parfois, un thermostat permettant de contrôler la température.

En position d'utilisation, le bloc de fromage est fixé sur le support, sous l'élément chauffant, de telle sorte que la surface qui est tournée vers la résistance fonde au bout de quelques instants.

On bascule alors le support vers l'avant afin de récupérer le fromage fondu sur une assiette, en le raclant au moyen d'une spatule en bois ou de tout autre instrument équivalent, avant de recommencer l'opération.

Les appareils de type connus, remplissent parfaitement leur fonction qui est de faire fondre du fromage, et d'assurer sa récupération à intervalles réguliers.

Cependant, l'absence de moyens permettant de régler la distance entre la surface du fromage et l'élément chauffant pose parfois problème

Notamment, il arrive en fonction de la dimension de la roue ou de la partie de roue de fromage, que celui-ci fonde trop rapidement ou au contraire pas assez rapidement.

Par ailleurs, avec des roues de grande taille, les conditions d'utilisation ne sont pas constantes, et varient au fur et à mesure que le morceau de fromage perd en dimension.

Il peut donc être utile de disposer de moyens permettant de régler rapidement et sans risque la position de l'élément de chauffage par rapport à la surface de fromage disposée en regard.

Certains appareils de type connu autorisent un réglage en hauteur de l'élément chauffant, par exemple, par le biais d'une crémaillère ou d'un rail comportant des orifices ménagés à intervalles réguliers pour le passage d'une goupille, le blocage étant effectué par des moyens de serrage, par exemple, une vis située à l'arrière du bras vertical.

Cette modalité n'est pas satisfaisante, car elle ne permet de contrôler que le déplacement de l'élément chauffant dans le plan vertical, le long du bras, le poids de la résistance compliquant de surcroît les manipulations.

Par ailleurs, une fois l'appareil mis en marche, il n'est plus possible de régler l'inclinaison de l'élément chauffant de manière à assurer un chauffage uniforme sur toute la surface de coupe du fromage, ceci supposant que l'élément chauffant et cette surface soient situés dans des plans parallèles, en regard l'un de l'autre.

Certains appareils autorisent un réglage en rotation du bloc recevant la résistance, mais uniquement à froid.

En effet, les moyens de réglage connus consistent en des écrous ou des vis à ailettes, placées à proximité de la résistance, et qui subissent de ce fait une forte élévation de température lorsque l'appareil est en fonctionnement, rendant impossible toute manipulation sans risque de brûlure pour l'utilisateur.

De plus, ils ne comportent aucun moyen pour limiter la rotation du bloc chauffant, dont le passage inopiné d'une position horizontale à une position verticale peut représenter un danger.

Un appareil de ce type est décrit dans le brevet CH 495 140.

Ce document montre un four à raclette comportant une plaque de base sur laquelle est montée une colonne creuse recevant dans sa partie supérieure un bras de support pour un corps de chauffe.

La position de ce corps de chauffe dans le plan vertical est réglée au moyen d'un bouton de commande disposé au sommet de la colonne centrale, au dessus du bras de support et du corps de chauffe.

Cette modalité n'est pas pleinement satisfaisante.

En effet, le corps de chauffe ne peut être incliné par rapport au support sur lequel il est fixé.

De plus, la position du bouton de commande dans la partie supérieure de l'appareil et à proximité immédiate du corps de chauffe ne facilite pas le réglage et peut comporter un certain danger.

Enfin, les appareils de type traditionnel ne permettent pas de faire fondre simultanément deux faces d'un même morceau de fromage.

En effet, le fromage fondu s'écoule et risque de tomber sur le plateau. Il est alors nécessaire de maintenir en permanence deux assiettes en position appropriée pour recueillir le fromage.

L'invention se propose de remédier à ces inconvénients en réalisant un appareil pour fondre tes fromages comportant des moyens permettant d'assurer l'entraînement dans le plan vertical d'un axe central recevant les différents éléments de support des fromages et de la résistance, et de recueillir le fromage fondu à partir de deux faces d'un même morceau, grâce à la présence de deux godets opposés pour la récupération du fromage disposés dans le prolongement du support de fromage.

L'invention serait mieux comprise en référence à la description ci-après d'un mode de réalisation d'un appareil selon l'invention et aux dessins annexés, dans lesquels :
- la figure 1 est une vue latérale en coupe de l'appareil selon l'invention,

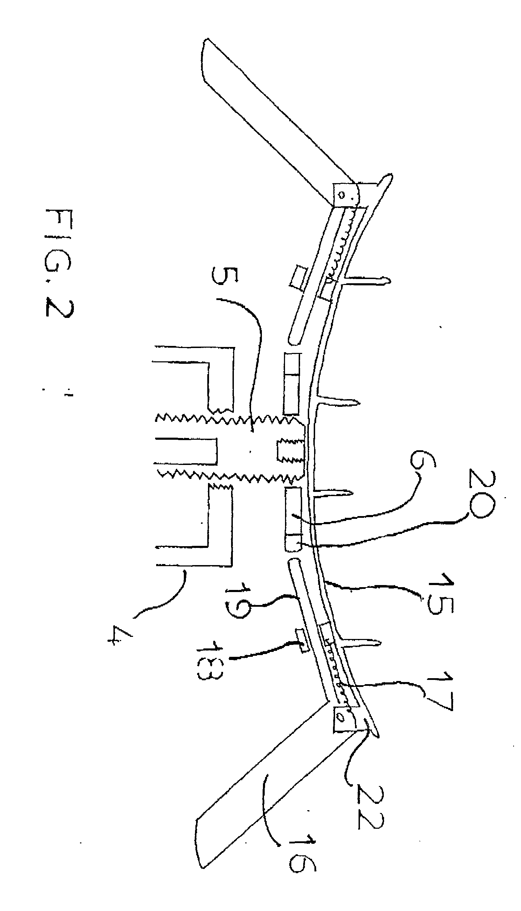

- la figure 2 est une vue rapprochée en coupe du support de fromage de l'appareil selon l'invention, et

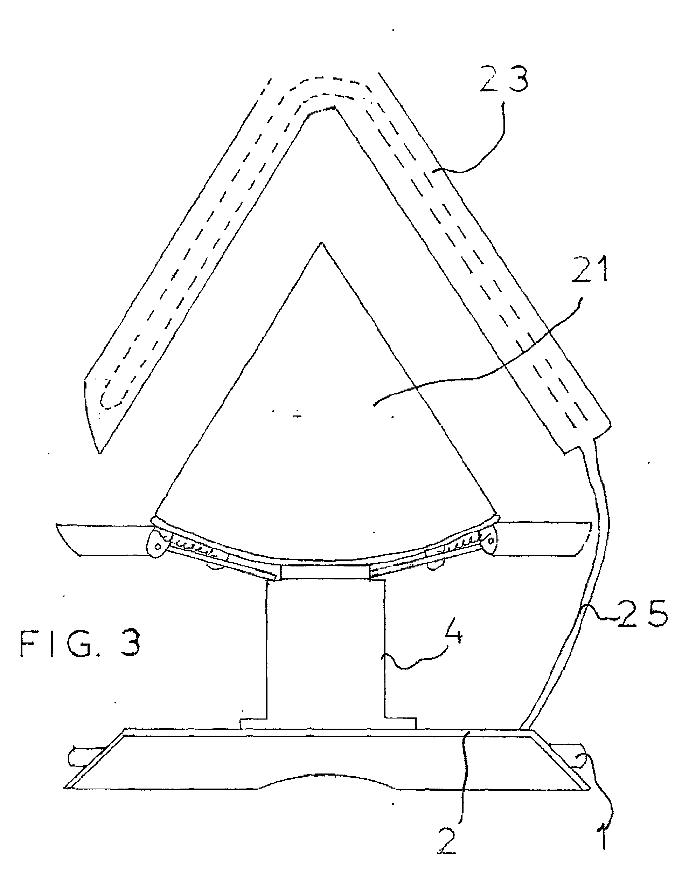

- la figure 3 est une vue agrandie montrant le positionnement du support portant le fromage par rapport aux résistances.

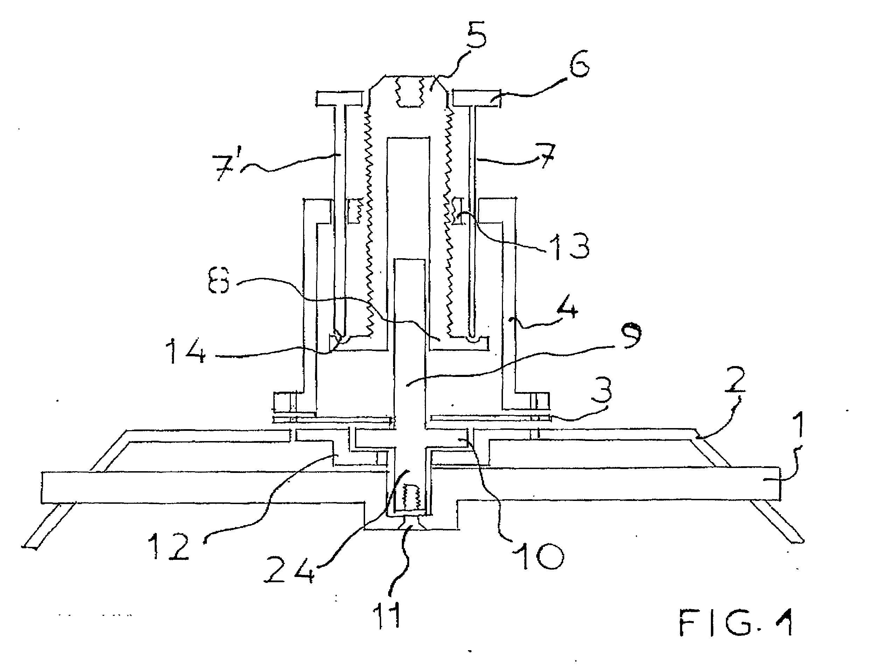

En référence aux figures annexées et plus particulièrement à la figure 1, l'appareil selon l'invention est composé d'un plateau (2) rectangulaire ou ovale qui forme la base de l'appareil.

Le plateau (2) reçoit tous les autres composants de l'appareil selon l'invention.

Sous le plateau (2) est disposé un volant horizontal (1) accessible des deux côtés du plateau et prévu pour entraîner un axe central (9) commandant le déplacement des composants de l'appareil dans le plan vertical.

L'axe central (9) comporte vers sa base une partie cylindrique élargie (10) s'appuyant sur un creux cylindrique ménagé en correspondance sur la partie centrale du plateau (2), la partie inférieure (24) de l'axe (9) de plus faible diamètre venant se loger dans la partie centrale du volant spécialement agencée en creux pour recevoir ledit axe. Une vis (11) permet de solidariser l'axe central (9 - 10) et le volant (1).

Cette configuration évite que le volant (1) tombe sous la base car il sera maintenu à un niveau minimal par la base élargie (10) de l'axe central (9) qui prend appui sur la partie emboutie (12) formant une crête axiale du plateau (2).

De plus, la manipulation du volant (1) est facilitée et ne présente aucun danger de brûlure, grâce à sa disposition sous la base.

Un disque de blocage (3) disposé au dessus de la partie cylindrique (10) de l'axe d'entraînement (9) fixe en position l'ensemble de telle sorte que ladite base cylindrique (10) ne puisse ni monter ni descendre.

Lorsque l'on actionne le volant (1) , il entraîne l'axe central (9) , lequel a une configuration non cylindrique, sauf sur le segment (10).

L'axe (9) entraîne une vis centrale (5) comportant une partie creuse et elle-même de section non cylindrique. De la sorte, la vis (5) qui est entraînée, tournera en même temps que le volant (1) et l'axe (9).

Un cylindre support est monté de part et d'autre de la vis centrale (5).

La partie supérieure du cylindre (4) comporte un filetage axial qui permettra d'entraîner en montée ou en descente un ensemble formé par la vis (5), une came centrale (6), des colonnes de maintien (7) et (7') et un disque cylindrique (8) solidaire de la vis (5).

La vis (5) est entraînée en montée ou en descente par la partie filetée du cylindre (4), ce qui permet de contrôler le sens de déplacement au travers du volant (1).

Le came (6) suivra le mouvement de montée ou de descente, grâce au disque (8) solidaire de la vis (5).

La came (6) prend appui sur ladite vis grâce à ce disque, par l'intermédiaire des colonnes (7 ,7').

Selon l'invention, la came (6) ne tournera pas, car elle est rendue solidaire dans ce but des colonnes (7) et (7') traversant le cylindre (4).

La came est elle-même fixée aux colonnes (7) et (7') qui prennent appui sur le disque (8) dans une gorge cylindrique (14) ménagée dans ledit disque.

La gorge cylindrique (14) permet, d'une part à l'ensemble disque et vis (8, 5) de tourner sans que les colonnes (7,7') ne s'y opposent, puisqu'elles glissent dans ladite gorge, d'autre part de transmettre avec le disque (8) le mouvement ascensionnel ou inverse à la came (6) et à l'ensemble porte fromage (15,16).

Grâce à cette construction, le volant (1) tournera dans le même plan horizontal, tout comme l'axe (9) et sa base élargie (10) ce qui permettra de faire monter ou descendre l'ensemble vis (5) , colonnes (7) , (7') , disque (8) et came (6) .

Cette construction permet de faire monter le support de fromage à chaque tour du volant (1).

Ainsi, par exemple, si le pas de vis au point (13) du cylindre (4) est de 3,5 mm, le porte fromage (15) et par conséquent le bloc de fromage à fondre (21) monteront de 3,5 mm à chaque tour de volant (1).

On peut ainsi compenser le retrait de fromage qui résulte de la fonte et du raclage de la partie exposée aux résistances.

De la sorte, le bloc à fondre sera toujours à distance égale et idéale de la résistance chauffante.

Sous le porte fromage (15) sont fixés deux axes (19) articulés à leur extrémité supérieure avec des godets (16). Les axes (19) sont contrôlés par des éléments de guidage (18) solidaires du support porte fromage (15).

Les godets (16) sont articulés autour d'une charnière (22) solidaire du support porte fromage (15).

Une tension permanente est assurée entre les godets (16) et les éléments de guidage (18) à travers un ressort (17) les reliant, de telle sorte que lesdits godets soient toujours en position horizontale relevée.

Lorsque le porte fromage (15) solidaire et entraîné par la vis (5), et par conséquent l'ensemble formé par les axes (19), les éléments du guidage (18), le ressort (17) et la charnière (22) et les godets (16) tournent, les axes (19) se déplaceront dans une position perpendiculaire à la position de cuisson et se trouveront alors en position face à la partie allongée (20) de la came (6).

Ceci aura pour conséquence de refouler l'axe (19) vers l'extérieur et de faire descendre rapidement le godet (16) .

Le fromage fondu recueilli et conservé par les godets s'écoulera dans deux assiettes disposées de part et d'autre.

Dans cette position les godets sont perpendiculaires par rapport à l'élément chauffant électrique (23) , lequel est recouvert d'une enveloppe protectrice.

A ce stade, le bloc de fromage sera également perpendiculaire à l'élément chauffant et ne sera donc plus en position de chauffe, permettant ainsi de racler si nécessaire le fromage sur chaque face, sans risque de brûlure.

Une fois le fromage fondu et retiré, on actionnera le volant 1 ce qui provoquera la remontée immédiate des godets (16).

Simultanément, les axes (19) ne se trouveront plus en face de la partie allongée (20) de la came (6) et des ressorts (17) agiront pour relever les godets (16).

Cette modalité permet une utilisation en toute sécurité.

En effet, les convives n'ont pas à actionner manuellement les godets (16), avec le risque de se brûler ou de déstabiliser l'ensemble par des actions simultanées, sauf à prévoir le blocage du volant par une troisième personne.

On élimine le risque qui découlerait d'un oubli de remonter les godets ou d'une mauvaise fixation.

Dès que les godets (16) sont placés, la rotation du volant (1) commandée par l'un ou l'autre des convives entraîne celle de l'ensemble porte fromage - godet (15, 16), mais pas de la came (6). Ainsi, lorsque les godets (16) arrivent en face de la partie allongée (20) de la came (6), ils s'inclinent automatiquement et simultanément de par le mouvement vers l'extérieur des axes (19) qui seront repoussés par la partie (20) de ladite came. De la sorte, on assure le déversement automatique du fromage fondu dans un plan perpendiculaire au plan de cuisson.

En imprimant un léger mouvement de rotation supplémentaire, on assurera la remontée automatique et simultanée des deux godets (16), puis on ramènera l'ensemble porte fromage - godet (15, 16) en position de cuisson.

L'élément chauffant (23) pourra être constitué par exemple d'une résistance et d'une enveloppe protectrice comportant des moyens pour envoyer la chaleur vers les deux côtés du bloc de fromage à fondre.

L'ensemble ascenseur (13, 8, 14, 7, 7', 5) est commandé par la rotation de l'ensemble (1, 24, 10, 9) et permet ainsi de faire fonctionner les godets (16) quelque soit leur hauteur.

En actionnant le volant (1) dans le sens inverse, on ramènera l'ensemble à sa position initiale base.

Ainsi, si l'on veut fondre moins vite le fromage, il suffira de descendre l'ensemble pour éloigner le bloc de fromage de la source de chaleur.

Cette modalité de réalisation permet de fondre du fromage en simultané pour deux personnes.

En effet, en utilisant un bloc de fromage découpé de manière à présenter deux angles opposés, on pourra faire fondre en simultané deux surfaces et ainsi satisfaire deux convives disposés à table l'un face à l'autre.

La description qui précède permet d'apprécier les avantages de l'appareil selon l'invention.

La distance entre le fromage et les moyens de chauffe peut être réglée facilement dans le plan vertical. Le fromage fondu peut s'écouler de lui-même dans des godets récepteurs, dont le déversement est assuré de manière automatique dans deux assiettes opposées par la seule inclinaison des godets. De même, le relèvement des godets est automatisé.

L'ensemble de ces opérations peut être assuré en simultané par deux convives assis l'un en face de l'autre.

Selon une forme de réalisation avantageuse, on pourra prévoir un plateau tournant disposé sous l'appareil selon l'invention ce qui permettra de faire pivoter l'appareil d'un quart de tour afin de placer les godets recevant les fromages fondus en face de deux autres convives.

Selon cette modalité, ce sont quatre personnes qui pourront se servir de l'appareil selon l'invention sans avoir à se déplacer autours de la table.

Selon une autre forme de réalisation, le volant (1) pourra être commandé par un moteur électrique (non représenté).

L'invention n'est pas limitée au mode de réalisation décrit ci-dessus à titre d'exemple non limitatif. En particulier, on pourra envisager de remplacer le fromage par tout autre aliment approprié, par exemples des morceaux de viande, sans que l'on sorte du cadre de l'invention.

## Revendications

1. Appareil à fondre les fromages, comportant un plateau (2), un support porte fromage (15), un bras vertical supportant des moyens de réglages et un élément chauffant, un volant horizontal (1) entraînant un axe central (9) commandant le déplacement des composants de l'appareil dans le plan vertical, **caractérisé en ce que** le volant (1) est disposé sous le plateau (2).

2. Appareil suivant la revendication 1, **caractérisé en ce que** l'axe central (9) comporte vers sa base une partie cylindrique élargie (10) s'appuyant sur un creux cylindrique ménagé en correspondance sur la partie centrale du plateau (2), la partie inférieure (24) de l'axe (9) de plus faible diamètre venant se loger dans la partie centrale du volant (1).

3. Appareil suivant la revendication 2, **caractérisé en ce qu'**un disque de blocage (3) est disposé au dessus de la partie cylindrique (10) pour la fixer en position.

4. Appareil suivant l'une des revendications précédentes, **caractérisé en ce que** l'axe central (9) et le volant (1) sont solidarisés au moyen d'une vis (5).

5. Appareil suivant la revendication 4, **caractérisé en ce qu'**un cylindre support (4) est monté de part et d'autre de la vis (5), la partie supérieure dudit cylindre comportant un filetage axial entraînant en montée ou en descente un ensemble formé par la vis (5), une came centrale (6), des colonnes de maintien (7) et (7') et un disque cylindrique (8) solidaire de la vis (5).

6. Appareil suivant la revendication 5, **caractérisé en ce que** la came (6) est fixée aux colonnes (7) et (7'), lesquelles prennent appui sur le disque (8) dans une gorge cylindrique (14) ménagée dans ledit disque.

7. Appareil suivant l'une quelconque des revendications précédentes, **caractérisé en ce que** sous le support porte fromage (15) sont fixés deux axes (19) articulés à leur extrémité supérieure avec des godets (16).

8. Appareil suivant la revendication 7, **caractérisé en ce que** les axes (19) sont contrôlés par des éléments de guidage (18) solidaires du support porte fromage (15).

9. Appareil suivant la revendication 7, **caractérisé en ce que** les godets (16) sont articulés autour d'une charnière (22) solidaire du support porte fromage (15).

10. Appareil suivant la revendication 7, **caractérisé en ce qu'**un ressort (17) relie les godets (16) et les éléments de guidage (18) pour assurer une tension permanente, de telle sorte que lesdits godets soient toujours en position horizontale relevée.
